(19) **Europäisches Patentamt / European Patent Office / Office européen des brevets**

(11) **EP 3 401 856 A1**

(12) **EUROPEAN PATENT APPLICATION**
published in accordance with Art. 153(4) EPC

(43) Date of publication:
**14.11.2018 Bulletin 2018/46**

(51) Int Cl.:
**G06Q 10/06** (2012.01)

(21) Application number: **17735873.6**

(86) International application number:
**PCT/CN2017/070515**

(22) Date of filing: **06.01.2017**

(87) International publication number:
**WO 2017/118435 (13.07.2017 Gazette 2017/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.01.2016 CN 201610008163**

(71) Applicant: **Ping An Technology (Shenzhen) Co., Ltd.**
**Shenzhen, Guangdong 518000 (CN)**

(72) Inventors:
• **WANG, Jianzong**
  **Shenzhen City,**
  **Guangdong Province (CN)**
• **XIA, Leihao**
  **Shenzhen City,**
  **Guangdong Province (CN)**
• **CAO, Luyang**
  **Shenzhen City,**
  **Guangdong Province (CN)**
• **XIAO, Jing**
  **Shenzhen City,**
  **Guangdong Province (CN)**

(74) Representative: **Inal, Aysegul Seda et al**
**Yalciner Patent and Consulting Ltd.**
**Tunus Cad. 85/4**
**06680 Kavaklidere, Ankara (TR)**

(54) **SYSTEM, DEVICE AND METHOD FOR RELEASING VEHICLE INSURANCE SURVEYING TASK, AND READABLE STORAGE MEDIUM**

(57) Disclosed are a system, device, method, and readable storage medium for issuing an auto insurance investigation task. The system includes: a task issuance module that acquires associated crowdsoucing parameters of an auto insurance investigation task, determining one or more public investigators matching the investigation task based on a preset first analysis rule and a preset model, and issuing the investigation task carrying the crowdsoucing parameters to mobile terminals of the determined public investigators; a data acquisition module that obtains corresponding investigation data of the investigation task from a mobile terminal of at least one of the determined public investigators who have accepted the task after recognizing the issued investigation task has been accepted; and a data analysis module that analyzes the obtained investigation data based on a preset second analysis rule and finding out the investigation data that conforms to preset conditions as the task result to be adopted. The disclosure offers the beneficial effect of using the crowdsourcing technology to issue auto insurance investigation tasks, thus improving the efficiency of issuing auto insurance investigation tasks, and also effectively reducing the cost of issuing auto insurance investigation tasks.

SYSTEM FOR ISSUING AUTO INSURANCE INVESTIGATION TASK

TASK ISSUANCE MODULE — 60

DATA ACQUISITION MODULE — 70

DATA ANALYSIS MODULE — 80

FIG. 1

**Description**

TECHNICAL FIELD

This disclosure relates generally to data processing, and more particularly relates to a system, a device, a method, and a readable storage medium for issuing an auto insurance investigation task.

BACKGROUND

In the case of complex traffic environments, timely and effective handling of traffic accidents is an important link to ease traffic pressure. In the present auto insurance industry, however, the operation of on-site investigation and vehicle damage evaluation business often relies on the human input of professional insurance personnel, which is expensive and inefficient.

In addition, due to the sensitivity of the financial and insurance industry data as well as the fact that the typical crowdsourcing management and distribution mechanism used in the current crowdsourcing industry is also difficult to provide adequate protection for the privacy information of the insured clients, none of the existent domestic commercial crowdsourcing platforms has set foot in the insurance business. Therefore, how to apply the task crowdsourcing technology on the on-site investigation and vehicle damage evaluation business so as to effectively overcome the disadvantages of high cost and low efficiency of on-site investigation and vehicle damage evaluation business becomes one of the urgent problems to be solved in the industry.

SUMMARY

In view of the above, there is a need to provide a system, a device, a method, and a readable storage medium for issuing an auto insurance investigation task so as to take advantage of the crowdsourcing technology to issue an auto insurance investigation task.

A system for issuing an auto insurance investigation task is provided, the system comprising: a task issuance module that acquires associated crowdsoucing parameters of an auto insurance investigation task, determines one or more public investigators that match the auto insurance investigation task based on a preset first analysis rule and a preset model, and issues the auto insurance investigation task carrying the crowdsoucing parameters to mobile terminals of the determined one or more public investigators; a data acquisition module that obtains corresponding investigation data of the auto insurance investigation task from a mobile terminal of at least one of the determined one or more public investigators who have accepted the issued auto insurance investigation task, after recognizing that the issued auto insurance investigation task has been accepted; and a data analysis module that analyzes the obtained investigation data based on a preset second analysis rule and finds out the investigation data that conforms to preset conditions as the task result to be adopted.

A device for issuing an auto insurance investigation task is also provided, the device including a processing unit, as well as a system for issuing an auto insurance investigation task, an input/output unit, a communications unit, and a storage unit that are coupled to the processing unit. The input/output unit is configured for inputting a user instruction and outputting response data of the device to the input user instruction. The communications unit is configured for communicative connection with a mobile terminal of a public investigator or a background server. The storage unit is used for storing the system for issuing an auto insurance investigation task as well as operation data of the system. The processing unit is configured to call and execute the system for issuing an auto insurance investigation task to perform the following operations: A: acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to mobile terminals of the determined one or more public investigators; B: obtaining corresponding investigation data of the auto insurance investigation task from a mobile terminal of at least one of the determined one or more public investigators who have accepted the issued auto insurance investigation task, after recognizing that the issued auto insurance investigation task has been accepted; and C: analyzing the obtained investigation data based on a preset second analysis rule and finding out the investigation data that conforms to preset conditions as the task result to be adopted.

A method of issuing an auto insurance investigation task is yet further provided, the method comprising: acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to mobile terminals of the determined one or more public investigators; obtaining corresponding investigation data of the auto insurance investigation task from a mobile terminal of at least one of the determined one or more public investigators who have accepted the issued auto insurance investigation task, after recognizing that the issued auto insurance investigation task has been accepted; and analyzing the obtained investigation data based on a preset second analysis rule and finding out the investigation data that conforms to preset conditions as the task result to be adopted.

A computer-readable storage medium is still further provided, the computer-readable storage medium storing one or more programs, which, when executed by one or more processors, perform the following operations: acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to mobile terminals of the determined one or more public investigators; obtaining corresponding investigation data of the auto insurance investigation task from a mobile terminal of at least one of the determined one or more public investigators who have accepted the issued auto insurance investigation task, after recognizing that the issued auto insurance investigation task has been accepted; and analyzing the obtained investigation data based on a preset second analysis rule and finding out the investigation data that conforms to preset conditions as the task result to be adopted.

Compared with the prior art, this disclosure acquires the associated crowdsoucing parameters of the auto insurance investigation task, determines one or more public investigators matching the auto insurance investigation task based on a preset first analysis rule and a preset model, and issues the auto insurance investigation task carrying the crowdsoucing parameters to the mobile terminals of the determined one or more public investigators. After recognizing that at least one public investigator has accepted the issued auto insurance investigation task, the corresponding investigation data of the auto insurance investigation task may then be harvested from the mobile terminals of the at least one public investigator who has accepted the task. Then the harvested investigation data is analyzed based on a preset second analysis rule to select the investigation data that meets the preset conditions as the task result to be adopted. Therefore, this disclosure provides the benefit effect of using the crowdsoucing technology to issue auto insurance investigation tasks, thereby improving the efficiency of issuing auto insurance investigation tasks and also effectively reducing the cost of issuing auto insurance investigation tasks.

BRIEF DESCRIPTION OF THE ACCOMPANYING DRAWINGS

FIG. 1 is an illustrative block diagram of a first embodiment of a system for issuing an auto insurance investigation task in accordance with the disclosure.

FIG. 2 is an illustrative block diagram of a second embodiment of a system for issuing an auto insurance investigation task in accordance with the disclosure.

FIG. 3 is an illustrative block diagram of an implementation of task issuance module 60 of the system embodiment illustrated in FIG. 1 or 2 in accordance with the disclosure.

FIG. 4 is an illustrative block diagram of an implementation of data analysis module 80 of the system embodiment illustrated in FIG. 1 or 2 in accordance with the disclosure.

FIG. 5 is an illustrative hardware configuration diagram of a first embodiment of a device for issuing an auto insurance investigation task in accordance with the disclosure.

FIG. 6 is an illustrative hardware configuration diagram of a second embodiment of a device for issuing an auto insurance investigation task in accordance with the disclosure.

FIG. 7 is an illustrative hardware configuration diagram of a first embodiment of a method of issuing an auto insurance investigation task in accordance with the disclosure.

DETAILED DESCRIPTION OF ILLUSTRATED EMBODIMENTS

Technical solutions of the disclosure will now be described in further detail in connection with specific embodiments and the accompanying drawings. It will be appreciated that the specific embodiments described herein are merely illustrative of the disclosure and are not intended to limit the disclosure.

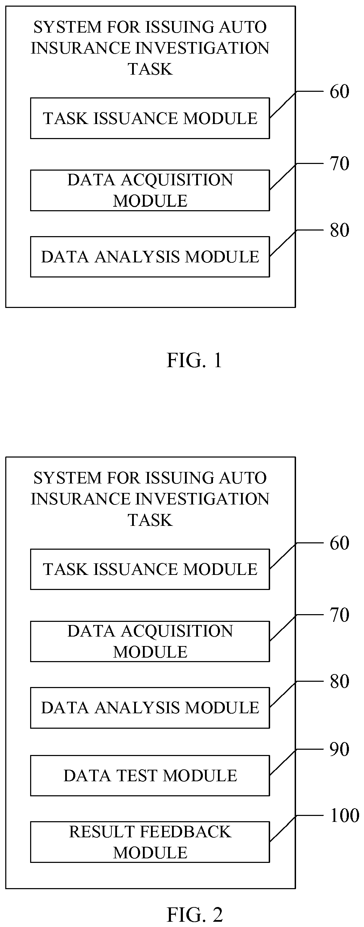

As illustrated in FIG. 1, a system for issuing an auto insurance investigation task is provided. The system may comprise a task issuance module 60, a data acquisition module 70, and a data analysis module 80.

The task issuance module 60 is configured for acquiring associated crowdsoucing parameters of an auto insurance investigation task, determining one or more public investigators that match the auto insurance investigation task based on a preset first analysis rule and a preset model, and issuing the auto insurance investigation task carrying the crowdsoucing parameters to mobile terminals of the determined one or more public investigators.

In this embodiment, when the auto insurance investigation task is to be issued for crowdsoucing, the task issuance module 60 may acquire the associated crowdsoucing parameters of this auto insurance investigation task. The crowdsoucing parameters acquired by the task issuance module 60 may include but are not limited to: effective period of the auto insurance investigation task (e.g., the date before which the task is still alive-i.e., the date by which the task can still be undertaken), time of completion of the auto insurance investigation task (e.g., after accepting an investigation task, the public investigator has to complete the task within the time of completion; otherwise the task fails), rewards (e.g., the remuneration gained if the public investigator completes the task within the specified time and as required, either in the form of redeeming points or cash, where the rewards can be received after the task is completed or the result is adopted), reward budget (e.g., the upper limit of the total amount of reward given to each public investigator), and so on. In this embodiment, the task issuance module 60 can acquire the corresponding crowdsoucing parameters based on the specific auto insurance investigation task, where the specific types of the crowdsoucing parameters, however, are not limited.

After acquiring the associated crowdsoucing parameters, the task issuance module 60 may determine one or more public investigators that match the auto insurance investigation task based on a preset first analysis rule and a preset model, and then send the auto insurance investigation task carrying the crowdsoucing parameters to the associated mobile terminals of the determined one or more public investigators. In determining the public investigators matching the auto insurance investigation task, the task issuance module 60 may base on the specific type and specific crowdsoucing parameters of the auto insurance investigation task as well as the personal information and historical investigation data of the public investigators to perform matching, so as to determine the corresponding public investigators, and then send the auto insurance investigation task to the associated mobile terminals of the determined public investigators.

In this embodiment, after determining the corresponding public investigators, the task issuance module 60 can acquire the mobile terminals of the public investigators based on the mobile terminal information bound with the personal information of these public investigators, and then issue the auto insurance investigation task carrying the crowdsoucing parameters to the associated mobile terminals of the determined public investigators. For example, the task issuance module 60 may issue the auto insurance investigation task carrying the crowdsoucing parameters-portrayed as "there is now an auto insurance investigation task A for crowdsoucing, which needs to be completed within 24 hours after being accepted, the reward for this task will be issued in cash with a minimum amount of the reward being 1000 RMB"-to the associated mobile terminals of the determined public investigators.

The data acquisition module is configured for harvesting corresponding investigation data of the auto insurance investigation task from a mobile terminal of at least one of the determined one or more public investigators who have accepted the issued auto insurance investigation task, after recognizing that the issued auto insurance investigation task has been accepted.

When at least one public investigator has accepted the above auto insurance investigation task, the public investigator can trigger a corresponding instruction of acceptance through the mobile terminal of the public investigator. As such, upon reception of the instruction sent from the mobile terminal, the data acquisition module 70 can recognize that there is a public investigator accepting the issued auto insurance investigation task. Thus, the data acquisition module 70 can obtain, in real time or based on the preset period or after reception of a data feedback instruction sent from the at least one public investigator, the corresponding investigation data of the auto insurance investigation task from the mobile terminal of the public investigator who has undertaken the task.

The data analysis module 80 is configured for analyzing the obtained investigation data based on a preset second analysis rule and finding out the investigation data that conforms to the preset conditions as the task result to be adopted.

If the data analysis module 80 determines that the corresponding investigation data of the above-described auto insurance investigation task has been obtained from each public investigator, or if the auto insurance investigation task fails and the corresponding investigation data of the auto insurance investigation task has been obtained from each of the public investigators who have accepted the auto insurance investigation task, then the data analysis module 80 may analyze the obtained investigation data according to the associated analysis rule and select from the obtained investigation data the investigation data that conforms to the preset conditions, and further take the investigation data that conforms to the preset conditions as the task result to be adopted. For example, the data analysis module 80 may perform an optimization analysis on the obtained investigation data and take at least one optimal set of investigation data as the task result to be adopted.

In an exemplary embodiment, in order to ensure the accuracy of the associated crowdsoucing parameters of the auto insurance investigation task and effectively reduce the investment of human, material and financial resources, the task issuance module 60 of the system for issuing an auto insurance investigation task according to the disclosure may acquire the associated crowdsoucing parameters of the auto insurance investigation task by using Lagrange multiplier method and Karush-Kuhn-Tucker (KKT) conditions method, or using augmented Lagrangian method combined with method of moving asymptotes.

According to the disclosure, the system for issuing an auto insurance investigation task acquires the associated crowdsoucing parameters of the auto insurance investigation task, determines one or more public investigators that match the auto insurance investigation task based on a preset first analysis rule and a preset model, and issues the auto insurance investigation task carrying the crowdsoucing parameters to the mobile terminals of the determined one or more public investigators. After recognizing that at least one public investigator has accepted the issued auto insurance investigation task, the corresponding investigation data of the auto insurance investigation task is harvested from the mobile terminal of at least one public investigator who has accepted the task. Then the harvested investigation data is analyzed based on a preset second analysis rule to select the investigation data that meets the preset conditions as the task result to be adopted. Therefore, this disclosure has the beneficial effect of using the crowdsoucing technology to issue auto insurance investigation tasks, thereby improving the efficiency of issuing auto insurance investigation tasks and also effectively reducing the cost of issuing auto insurance investigation tasks.

Based on the description of the embodiment illustrated in FIG. 1, the system for issuing an auto insurance investigation task in accordance with the disclosure may further comprise a data test module 90 and a result feedback module 100.

The data test module 90 is configured for performing a significance test on the task result to be adopted according to a preset test rule.

The result feedback module 100 is configured for: taking the task result to be adopted as the final result and returning the final result to an issuer of the auto insurance task if the significance test is successful; otherwise sending the task result to be adopted to a preset terminal for manual review if the significance test fails.

In this embodiment, the data test module 90 may perform a significance test on the task result to be adopted based on the preset test rule, so that the result feedback module 100 can further determine to take the task result to be adopted as the final result for feedback, or send the task result to be adopted to the preset terminal for manual review.

In an exemplary embodiment, the data test module 90 may perform a confidence level test on the above-described task result to be adopted using Student's T-Test. If the data test module 90 tests the task result to be adopted as not significant, then it indicates the task result to be adopted succeeds in passing the significance test, and the result feedback module 100 would take the task result to be adopted as the final result and return the final result to the issuer of the auto insurance investigation task. For example, the result feedback module 100 may return the above-described task result to be adopted as the final result to the issuing terminal of the auto insurance investigation task. Otherwise, if the test result of the data test module 90 shows the task result to be adopted is significant (e.g., the confidence level is greater than 95%), then the significance test fails, and then the result feedback module 100 may send the task result to be adopted to a predetermined terminal for manual review.

The system for issuing an auto insurance investigation task in accordance with the disclosure performs a significance test on the task result to be adopted based on the preset test rule. If the significance test is successful, then the task result to be adopted would be taken as the final result and returned to the issuer of the auto insurance task; otherwise if the significance test fails, then the task result to be adopted may be sent to a preset terminal for manual review. Therefore, the accuracy of the test result of the auto insurance investigation task can be improved.

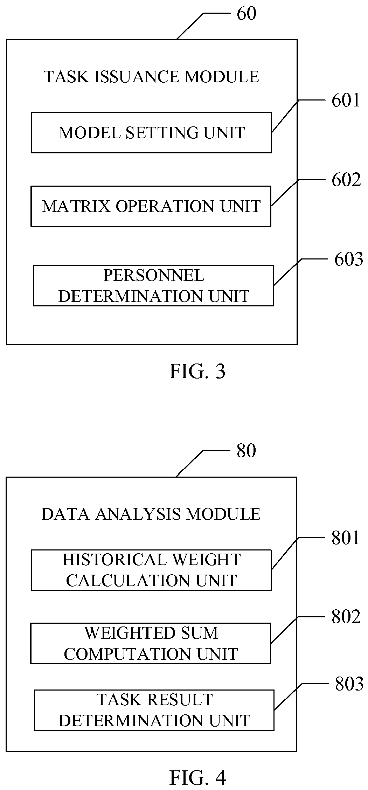

Based on the description of the embodiments illustrated in FIGS. 1 and 2, the task issuance module 60 of the system for issuing an auto insurance investigation task in accordance with the disclosure may comprise a model setting unit 601, a matrix operation unit 602, and a personnel determination unit 603, as illustrated in FIG. 3.

The model setting unit 601 is configured for setting a corresponding preset model of each auto insurance investigation task as an i-dimensional space vector $Qi$, and setting a corresponding preset model of the personal information of each public investigator as a j-dimensional space vector $Pj$.

The matrix operation unit 602 is configured for defining an operation matrix $Mi, j = QiPj$ for the vectors $Qi$ and $Pj$, and calculating a corresponding personal weight value of each public investigator based on the defined operation matrix.

The personnel determination unit 603 is configured for selecting the public investigators whose personal weight values are greater than a preset threshold as the public investigators that match the auto insurance investigation task.

In this embodiment, the preset model may be a latent factor model. The latent factor model may use a combination of task profiles and user profiles in the historical data to build a model, and then recommend several optimal public investigators for the current auto insurance investigation task. The task profiles are used to portray task features while the user profiles are an effective tool for portraying the target users and associating the users' demands with the design directions. That is, different auto insurance investigation tasks may require public investigators with different characteristics.

The model setting unit 601 may start from various data dimensions of the historical performances of the public investigators, and the corresponding personal weight value of each public investigator may then be calculated through the above operation matrix defined by the matrix operation unit 602, and then the personnel determination unit 603 may select those public investigators whose personal weight values are greater than the preset threshold as the public investigators matching the auto insurance investigation task. Thud the optimal public investigators can be found automatically for personalized matching to the auto insurance investigation task.

The system for issuing an auto insurance investigation task according to this disclosure can define a corresponding operation matrix to calculate the corresponding personal weight value of each public investigator, and select those public investigators whose personal weight values are greater than the preset threshold as the public investigators matching the auto insurance investigation task. Thus, this disclosure provides the beneficial effect of automatically matching different auto insurance investigation tasks with the corresponding public investigators, thereby improving the intelligence of issuing auto insurance investigation tasks and also further improving the accuracy of issuing auto insurance investigation tasks.

Based on the description of the embodiments illustrated in FIGS. 1, 2, and 3, the data analysis module 80 of the system for issuing an auto insurance investigation task in accordance with the disclosure may comprise a historical weight calculation unit 801, a weighted sum calculation unit 802, and a task result determination unit 803.

The historical weight calculation unit 801 is configured for calculating the corresponding historical data weight value of each public investigator who has accepted the auto insurance investigation task, based on the historical investigation data of the public investigator.

In this embodiment, the historical weight calculation unit 801 can acquire the historical investigation data of each public investigator who has accepted the auto insurance investigation task, e.g., the number of completed historical tasks, the rate of acceptance of historical task results, or the like data of each public investigator. So based on the above-described historical investigation data, the historical weight calculation unit 801 can calculate the corresponding historical data weight value of each public investigator. For example, the historical weight calculation unit 801 may take a product of the number of completed historical tasks and the rate of acceptance of historical task results of each public investigator as the corresponding historical data weight value of the public investigator.

The weighted sum calculation unit 802 is configured for calculating a corresponding sum of weighted fractions of each set of investigation data obtained under the auto insurance investigation task based on the obtained historical data weight values according to a preset formula.

The task result determination unit 803 is configured for using the set of investigation data with the highest sum of weighted fractions as the task result to be adopted.

Based on the above-described historical data weight values acquired by the historical weight calculation unit 801, the weighted sum calculation unit 802 can calculate the corresponding sum of weighted fractions of each set of investigation data obtained under this auto insurance investigation task using the preset formula.

In an exemplary embodiment, the following formula is used:

$$\sum_{i=1}^{n} W_i * I_{ANS_i=A} = S_A, \quad \sum_{i=1}^{n} W_i * I_{ANS_i=B} = S_B, \dots$$

where in the above calculation formula, Wi denotes the weight of the i-th public investigator, ANSi denotes the results the i-th public investigator selects for various answers (e.g., results selected for answers A, B ..., may be either "yes" or "no"), $S_A$, $S_B$ ... respectively represent the sums of the weight fractions of the various answers (e.g., answers A, B, ...), and the value of $I_{ANSi}$ is either 0 or 1 (e.g., if the investigator i has selected the answer A, then the corresponding $I_{ANSi}$ value of the investigator i is 1, otherwise 0.

Based on the above-described calculation formula, the weighted sum calculation unit 802 can calculate the corresponding sum of weighted fractions of each set of investigation data acquired under this auto insurance investigation task, and then the task result determination unit 803 can take the set of investigation data with the highest sum of weighted fractions as the task result to be adopted.

The system for issuing an auto insurance investigation task according to this disclosure calculates the corresponding sum of weighted fractions of each set of investigation data obtained under the auto insurance investigation task based on the respective historical data weight values of various public investigators according to the preset formula, and then use the set of investigation data with the highest sum of weighted fractions as the task result to be adopted, further improving the accuracy of the task result to be adopted.

In hardware implementation, the task issuance module 60, the data acquisition module 70, and the data analysis module 80 described supra can be in the form of hardware embedded in or independent of the device for issuing an auto insurance investigation task, or can also be stored in the form of software in a memory of the device facilitating one or more processor to call and perform the corresponding operations of the various modules described supra. The processors may be central processing units (CPU), microprocessors, single chip microcomputers (SCM), etc.

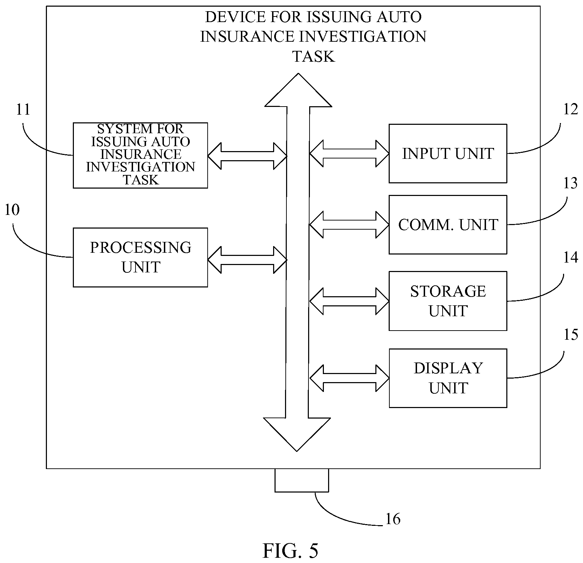

FIG. 5 shows a hardware configuration diagram of a first embodiment of a device for issuing an auto insurance investigation task in accordance with the disclosure. In this embodiment, the device for issuing an auto insurance investigation task may include a processing unit 10, as well as a system 11 for issuing an auto insurance investigation task, an input/output unit 12, a communications unit 13, a storage unit 14, a display unit 15, and an indicator light 16 that are coupled to the processing unit 10.

The input/output unit 12 may be one or more physical buttons and/or mice and/or joysticks, and may be configured for inputting a user instruction and outputting response data of the device to the input user instruction.

The communications unit 13 may be communicatively connected to mobile terminals (e.g., mobile phones, tablet computers, etc.) of one or more public investigators or to a back-end server. The communications unit 13 may include a WiFi module (thereby operative to communicate with the back-end server over the mobile Internet through the WiFi module), a Bluetooth module (thereby operative to perform short range communications with a mobile phone through the Bluetooth module, and/or a GPRS module (thereby operative to communicate with the back-end server over the mobile Internet).

The storage unit 14 may include a storage space or a collection of a plurality of storage spaces for storing system 11 for issuing an auto insurance investigation task as well as the operation data of the system 11.

The display unit 15 is configured for displaying a human-computer interaction interface for the user to input an instruction and for outputting and displaying the response data of the device to the user instruction.

The indicator light 16 is configured for emitting an indicative light to indicate that there is currently a public investigator accepting the issued auto insurance investigation task.

The processing unit 10 is configured for calling and executing the system 11 for issuing an auto insurance investigation task to perform the following operations: A: acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to the mobile terminals of the determined one or more public investigators; B: obtaining corresponding investigation data of the auto insurance investigation task from a mobile terminal of at least one of the determined one or more public investigators who have accepted the issued auto insurance investigation task, after recognizing that the issued auto insurance investigation task has been accepted; and C: analyzing the obtained investigation data based on a preset second analysis rule and finding out the investigation data that conforms to preset conditions as the task result to be adopted.

The system 11 for issuing an auto insurance investigation task may consist of a series of program code or code instructions, which can be called and executed by the processing unit 10 to perform the corresponding functions of the included program code or code instructions.

In some exemplary implementations, the processing unit 10 calls and executes the system 11 for issuing an auto insurance investigation task to further perform the following operations: performing a significance test on the task result to be adopted based on a preset test rule; if the significance test is successful, taking the task result to be adopted as the final result and returning the final result to an issuer of the auto insurance task; otherwise if the significance test fails, then sending the task result to be adopted to a preset terminal for manual review.

In some exemplary implementations, the processing unit 10 calls and executes the system 11 for issuing an auto insurance investigation task to perform the following operations in performing the above operation A: acquiring the associated crowdsoucing parameters of the auto insurance investigation task by using the Lagrange multiplier method and Karush-Kuhn-Tucker (KKT) conditions method, or using augmented Lagrangian method combined with method of moving asymptotes.

In some exemplary implementations, the processing unit 10 calls and executes the system 11 for issuing an auto insurance investigation task to perform the following operations in performing the above operation A: setting a corresponding preset model of each auto insurance investigation task as an i-dimensional space vector $Q_i$, and setting a corresponding preset model of the personal information of each public investigator as a j-dimensional space vector $P_j$; defining an operation matrix $M_i$, $j = Q_iP_j$ for the vectors $Q_i$ and $P_j$, and calculating a corresponding personal weight value of each public investigator based on the defined operation matrix; and selecting the public investigators whose personal weight values are greater than a preset threshold as the public investigators that match the auto insurance investigation task.

In some exemplary implementations, the processing unit 10 calls and executes the system 11 for issuing an auto insurance investigation task to perform the following operations in performing the above operation C: calculating the corresponding historical data weight value of each public investigator who has accepted the auto insurance investigation task based on the historical investigation data of the public investigator; calculating a corresponding sum of weighted fractions of each set of investigation data obtained under the auto insurance investigation task based on the obtained historical data weight values according to a preset formula; and using the set of investigation data with the highest sum of weighted fractions as the task result to be adopted.

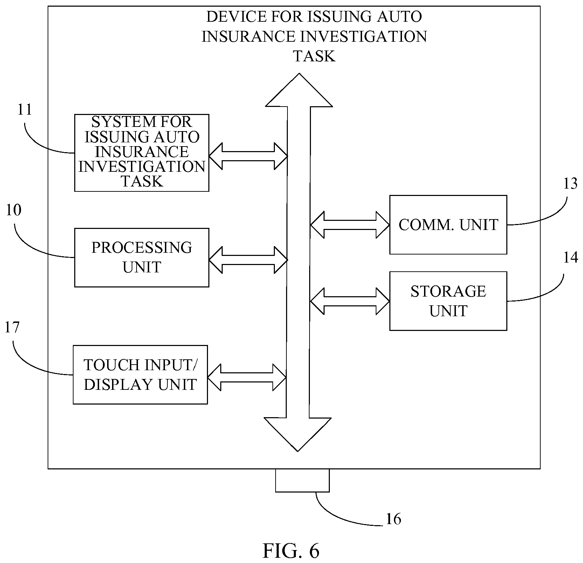

FIG. 6 shows a hardware configuration diagram of a second embodiment of a device for issuing an auto insurance investigation task in accordance with the disclosure. The device of this embodiment is substantially similar to that of the first embodiment, the major difference lies in that in this embodiment the input/output unit 12 and the display unit 15 of the device are replaced by a touch input/display unit 17.

The touch input/display unit 17 is configured for providing a human-computer interaction interface for the user to input an instruction based on the human-computer interaction interface and for outputting and displaying the response data of the device for issuing an auto insurance investigation task to the user instruction. In this embodiment, the touch input/display unit 17 may include a touch input unit and a display unit. The touch input unit is configured for touch input within the touch sensing area of the human-computer interaction interface, while the display unit may be a display unit embedded with a touch panel. The human-computer interaction interface may include one or more virtual keys (not shown), which have the same functions as the physical buttons described in the first embodiment of the disclosure, and so are not to be detailed herein. In addition, it will be appreciated that any physical key and/or mouse and/or joystick mentioned in the first embodiment can be replaced with virtual keys on the touch input/display unit 17.

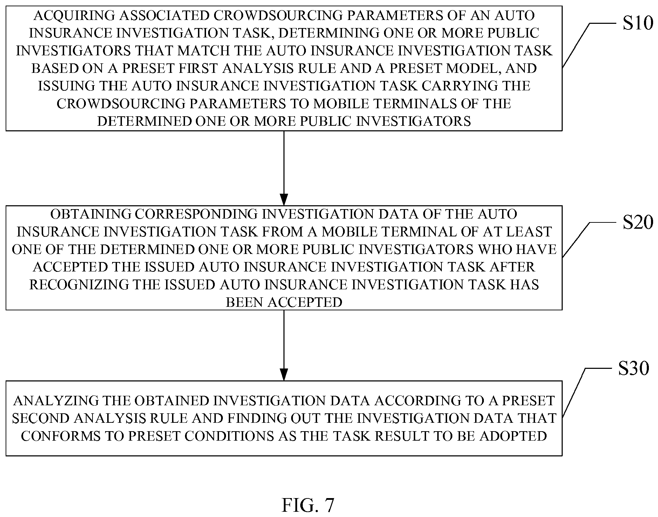

This disclosure also provides a method of issuing an auto insurance investigation task using crowdsoucing technology. As illustrated in FIG. 7, the method of issuing an auto insurance investigation task may be implemented as the following steps S10 to S30.

In step S10, associated crowdsoucing parameters of an auto insurance investigation task are acquired. Then one or more public investigators that match the auto insurance investigation task are determined based on a preset first analysis rule and a preset model. The auto insurance investigation task carrying the crowdsoucing parameters then is issued to mobile terminals of the determined one or more public investigators.

In this embodiment, when the auto insurance investigation task is to be issued for crowdsoucing, the associated crowdsoucing parameters of this auto insurance investigation task may first be acquired. The acquired crowdsoucing parameters include but are not limited to: validity period of the auto insurance investigation task (e.g., the date before which the task is still alive, i.e., the date by which the task can still be undertaken), time of completion of the auto insurance investigation task (e.g., after accepting an investigation task, the public investigator has to complete the task within the time of completion; otherwise the task fails), rewards (e.g., the remuneration gained if the public investigator completes the task within the specified time and as required, either in the form of redeeming points or cash, where the rewards can be received after the task is completed or the result is adopted), reward budget (e.g., the upper limit of the total amount of reward given to each public investigator), and so on. In this embodiment, the associated crowdsoucing parameters can be acquired based on the specific auto insurance investigation task, where the specific types of the crowdsoucing parameters, however, are not limited.

After the associated crowdsoucing parameters are acquired, one or more public investigators that match the auto insurance investigation task may be determined based on a preset first analysis rule and a preset model, and then the auto insurance investigation task carrying the crowdsoucing parameters may be sent to the associated mobile terminals of the determined one or more public investigators. In determining the public investigators matching the auto insurance investigation task, the specific type and the specific crowdsoucing parameters of the auto insurance investigation task, as well as the personal information and historical investigation data of the public investigators may be based to perform matching, so as to determine the corresponding public investigators, and then the corresponding auto insurance investigation task may be sent to the associated mobile terminals of the determined one or more public investigators.

In this embodiment, after determining the corresponding public investigators, the mobile terminals of the public investigators may be acquired based on the mobile terminal information bound with the personal information of these public investigators, and the auto insurance investigation task carrying the crowdsoucing parameters may be sent to the associated mobile terminals of the determined public investigators. For example, the auto insurance investigation task carrying the crowdsoucing parameters-portrayed as "there is now an auto insurance investigation task A for crowdsoucing, which needs to be completed within 24 hours after being accepted, the reward for this task will be issued in cash with a minimum amount being 1000 RMB"- to the associated mobile terminals of the determined public investigators.

In step S20, after at least one public investigator who has accepted the issued auto insurance investigation task is recognized, corresponding investigation data of the auto insurance investigation task is obtained from the mobile terminal of at least one public investigator who has accepted the issued auto insurance investigation task.

When at least one public investigator accepts the above auto insurance investigation task, the public investigator can trigger a corresponding instruction of acceptance through the mobile terminal of the public investigator. As such, upon reception of the instruction sent from the mobile terminal, it can be recognized that there is a public investigator accepting the above issued auto insurance investigation task. Thus, the corresponding investigation data of the auto insurance investigation task may be obtained, in real time or based on a preset period or after reception of a data feedback instruction sent by the public investigator, from the mobile terminal of the above at least one public investigator who has undertaken the task,.

In step S30, based on a preset second analysis rule, the obtained investigation data is analyzed and the investigation data that conforms to preset conditions is found out as the task result to be adopted.

If determining the corresponding investigation data of the above-described auto insurance investigation task has been acquired from each public investigator, or if the auto insurance investigation task fails and the corresponding investigation data of the above auto insurance investigation task has been acquired from each of the public investigators who have accepted the auto insurance investigation task, then the obtained investigation data may be analyzed according to the associated analysis rule to select from the obtained investigation data the investigation data that conforms to the preset conditions, and further the investigation data that meets the preset conditions will be taken as the task result to be adopted. For example, an optimization analysis may be carried out on the obtained investigation data and at least one optimal set of investigation data may be taken as the task result to be adopted.

In an exemplary embodiment, in order to ensure the accuracy of the associated crowdsoucing parameters of the auto insurance investigation task and effectively reduce the investment of human, material and financial resources, in step S10 of the method of issuing an auto insurance investigation task, the associated crowdsoucing parameters of the auto insurance investigation task can be acquired by using method 1: the Lagrange multiplier method and Karush-Kuhn-Tucker (KKT) conditions method, or method 2: augmented Lagrangian method combined with method of moving asymptotes.

Assuming the reward function is f (x) and our goal is to optimize this function to find the optimal strategy.

$$\max\ f(x);$$

$$\text{s.t.}\quad h_j(x)=0,\ j=1,\ 2,\ \ldots\ldots,\ p;$$

$$g_i(x)\leq 0,\ i=1,\ 2,\ \ldots\ldots,\ q;$$

Of course, there may be some limitations, such as budget, time, number of employees. The function $h_j$ can be a budget constraint, the function g; can be a constraint such as completion time. The Lagrange multiplier method and Karush-Kuhn-Tucker (KKT) conditions method are relatively common nonlinear programming methods. The Lagrange multiplier method is used to solve equality constraint problems, while KKT is used to solve inequality constraint problems. The advantage of this method is that it can solve convex function optimization problems and quickly get the global optimal solutions.

1. Lagrange multiplier method: suppose the problem is:

$$\min\ f(x);$$

$$\text{s.t.}\quad h(x)=0;$$

We can get the solution by solving the following equations::

$$\nabla f - \lambda \nabla h = 0$$

$$h(x) = 0$$

2. KKT is used to solve inequality optimization problems, assuming the problem is:

$$\min\ f(x);$$

$$\text{s.t.}\quad g(x)\geq a;$$

First assume that there is a value b such that g (x) = b, so that it is transformed into a Lagrange multiplier problem and the above four KKT conditions can be combined to solve for the optimal decision.

$$\nabla L = \nabla f - \lambda \nabla g = 0$$

$$\frac{\partial L}{\partial \lambda} = -g(x) + b = 0$$

$$\frac{\partial L}{\partial b} = \lambda \leq 0$$

$$(g(x) - a)\lambda = (b - a)\lambda = 0$$

Method 2 is a combination of the augmented Lagrange multiplier method and the method of moving asymptotes. The advantage of the augmented Lagrangian method is that it can merge the equality constraints such as the budget with the objective function and the inequality constraints into a new programming function. In simple terms, the augmented Lagrangian method can transform an optimization problem with equality constraints (e.g., budget) into an unrestricted optimization problem by adding a constraint penalty and a Lagrange multiplier. Suppose the problem is:

$$\min \ f(x);$$

$$\text{s.t.} \ C_i(x) = 0, \ i = 1, 2, \ldots\ldots, n;$$

The augmented Lagrangian method then transforms this problem into an unrestricted problem:

$$L(x, \lambda_k; \mu_k) := f(x) - \sum_{i \in \varepsilon} \lambda_{i,k} C_i(x) + \frac{\mu_k}{2} \sum_{i \in \varepsilon} C_i(x)^2$$

The method of moving asymptote can be used to solve an optimization problem with inequality constraints. The new objective function and the inequality constraints can obtain the optimal strategy through the use of local method of moving asymptotes for gradient-based local optimization. For example, the reward level for an investigation task should vary according to the difficulty of the task, i.e., the harder the task, the more reward should be offered to the public investigator who has completed the task, but meanwhile the cost of the task will also increase. By optimizing the reward function, we can calculate the optimal combination of task elements.

According to the disclosure, the method of issuing an auto insurance investigation task acquires the associated crowdsoucing parameters of the auto insurance investigation task, determines one or more public investigators that match the auto insurance investigation task based on a preset first analysis rule and a preset model, and issues the auto insurance investigation task carrying the crowdsoucing parameters to the mobile terminals of the determined one or more public investigators. After recognizing that at least one public investigator has accepted the issued auto insurance investigation task, the corresponding investigation data of the auto insurance investigation task is harvested from the mobile terminals of the public investigators who have accepted the task. Then the harvested investigation data is analyzed based on a preset second analysis rule to select the investigation data that meets the preset conditions as the task result to be adopted. Therefore, this disclosure has the beneficial effect of using the crowdsoucing technology to issue auto insurance investigation tasks, thereby improving the efficiency of issuing auto insurance investigation tasks and also effectively reducing the cost of issuing auto insurance investigation tasks.

Based on the description of the embodiment illustrated in FIG. 7, in the method of issuing an auto insurance investigation task according to the disclosure, the investigation data analyzed to satisfy the preset conditions may further be inspected to ensure that the task to be adopted meets the requirements.

The method of issuing an auto insurance investigation task may further comprise the following steps, subsequent to the step S30 of the embodiment illustrated in FIG. 7, i.e., analyzing the acquired investigation data to find out the investigation data that conforms to the preset conditions as the task result to be adopted: performing a significance test on the task result to be adopted based on a preset test rule; if the significance test is successful, taking the task result to be adopted as the final result and returning the final result to an issuer of the auto insurance task; otherwise if the significance test fails, then sending the task result to be adopted to a preset terminal for manual review.

In this embodiment, a significance test may be performed on the task result to be adopted based on the preset test rule, so as to further determine to take the task result to be adopted as the final result for feedback, or send the task

EP 3 401 856 A1

result to be adopted to the preset terminal for manual review.

In an exemplary embodiment, a confidence level test may be performed on the above-described task result to be adopted using Student's T-Test. If the task result to be adopted is tested as not significant, then it indicates the task result to be adopted succeeds in passing the significance test, and the task result to be adopted may be taken as the final result and returned to the issuer of the auto insurance investigation task. For example, the above-described task result to be adopted may be returned as the final result to the issuing terminal of the auto insurance investigation task. Otherwise, if the task result to be adopted is tested as significant (e.g., the confidence level is greater than 95%), then the significance test fails, and then this task result may be sent to a predetermined terminal for manual review.

The method of issuing an auto insurance investigation task in accordance with the disclosure performs a significance test on the task result to be adopted based on the preset test rule. If the significance test is successful, then the task result to be adopted would be taken as the final result and returned to the issuer of the auto insurance task; otherwise if the significance test fails, then the task result to be adopted may be sent to a preset terminal for manual review. Therefore, the accuracy of the test result of the auto insurance investigation task can be improved.

Based on the description of the foregoing embodiment, in determining the public investigators that match the auto insurance investigation task based on the preset first analysis rule and preset model in the method of issuing an auto insurance investigation task, the technical solution of the embodiment described below can be employed.

In the method of issuing an auto insurance investigation task, determining the public investigators matching the auto insurance investigation task based on the preset first analysis rule and preset model can be implemented as the following steps: setting a corresponding preset model of each auto insurance investigation task as an i-dimensional space vector Qi, and setting a corresponding preset model of the personal information of each public investigator as a j-dimensional space vector Pj; defining an operation matrix Mi, j = QiPj for the vectors Qi and Pj, and calculating a corresponding personal weight value of each public investigator based on the defined operation matrix through logistic regression method; and selecting the public investigators whose personal weight values are greater than a preset threshold as the public investigators that match the auto insurance investigation task.

In this embodiment, the preset model may be a latent factor model. The latent factor model may use a combination of task profiles and user profiles in the historical data to build a model, and then recommend several optimal public investigators for the current auto insurance investigation task. The task profiles are used to portray task features while the user profiles are an effective tool for portraying the target users and associating the users' demands with the design directions. That is, different auto insurance investigation tasks may require public investigators with different characteristics.

Starting from various data dimensions of the historical performances of the public investigators, the corresponding personal weight value of each public investigator may then be calculated through the operation matrix defined above, and those public investigators whose personal weight values are greater than the preset threshold may be selected as the public investigators matching the auto insurance investigation task. Thus, the optimal public investigators can be found out automatically for personalized matching to the auto insurance investigation task.

The method of issuing an auto insurance investigation task according to this disclosure can define a corresponding operation matrix to calculate the corresponding personal weight value of each public investigator, and select those public investigators whose personal weight values are greater than the preset threshold as the public investigators matching the auto insurance investigation task. Therefore, this disclosure provides the beneficial effect of automatically matching different auto insurance investigation tasks with the corresponding public investigators, thereby improving the intelligence of issuing auto insurance investigation tasks and also further improving the accuracy of issuing auto insurance investigation tasks.

Based on the description of the foregoing embodiment, in the method of issuing an auto insurance investigation task, the step S30 of the above embodiment (i.e., analyzing the obtained investigation data based on the preset second analysis rule to find out the investigation data that conforms to the preset conditions as the task result to be adopted) may be implemented as the following operations. The corresponding historical data weight value of each public investigator who has accepted the auto insurance investigation task may be acquired based on the historical investigation data of the public investigator. In this embodiment, the historical investigation data of each public investigator who has accepted the auto insurance investigation task can be acquired, e.g., the number of completed historical tasks, the rate of acceptance of historical tasks results, or the like data of each public investigator. So based on the above-described historical investigation data, the corresponding historical data weight value of each public investigator can be calculated. For example, the product of the number of completed historical tasks and the rate of acceptance of historical task results of each public investigator may be taken as the corresponding historical data weight value of the public investigator. Then a corresponding sum of weighted fractions of each set of investigation data obtained under the auto insurance investigation task may be calculated based on the obtained historical data weight values according to a preset formula. And the set of investigation data with the highest sum of weighted fractions may be selected as the task result to be adopted.

Based on the obtained historical data weight values, a preset formula can be used to calculate a corresponding sum of weighted fractions of each set of investigation data obtained under the auto insurance investigation task.

In an exemplary embodiment, the following formula is used:

$$\sum_{i=1}^{n} W_i * I_{ANS_i=A} = S_A , \quad \sum_{i=1}^{n} W_i * I_{ANS_i=B} = S_B , \ldots$$

where in the above calculation formula, Wi denotes the weight of the i-th public investigator, ANSi denotes the results the i-th public investigator selects for various answers (e.g., results selected for answers A, B ..., may be either "yes" or "no"), SA, SB ... respectively represent the sums of the weight fractions of the various answers (e.g., answers A, B, ...), and the value of $I_{ANSi}$ is either 0 or 1 (e.g., if the investigator i has selected the answer A, then the corresponding $I_{ANSi}$ value of the investigator i is 1, otherwise 0.

Based on the above-described calculation formula, the corresponding sum of weighted fractions of each set of investigation data acquired under this auto insurance investigation task can be calculated, and then the set of investigation data with the highest sum of weighted fractions may be taken as the task result to be adopted.

The method of issuing an auto insurance investigation task according to this disclosure calculates the corresponding sum of weighted fractions of each set of investigation data obtained under the auto insurance investigation task based on the respective historical data weight values of various public investigators according to the preset formula, and then use the set of investigation data with the highest sum of weighted fractions as the task result to be adopted, further improving the accuracy of the task result to be adopted.

This disclosure further provides a computer-readable storage medium that stores one or more programs, which, when executed by one or more processors, perform the following operations: acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to mobile terminals of the determined one or more public investigators; obtaining corresponding investigation data of the auto insurance investigation task from a mobile terminal of at least one of the determined one or more public investigators who have accepted the issued auto insurance investigation task, after recognizing that the issued auto insurance investigation task has been accepted; and analyzing the obtained investigation data based on a preset second analysis rule and finding out the investigation data that conforms to preset conditions as the task result to be adopted.

In some exemplary implementations, the method may further include: performing a significance test on the task result to be adopted based on a preset test rule; if the significance test is successful, taking the task result to be adopted as the final result and returning the final result to an issuer of the auto insurance task; and otherwise if the significance test fails, then sending the task result to be adopted to a preset terminal for manual review.

In some exemplary implementations, analyzing the obtained investigation data based on a preset second analysis rule and finding out the investigation data that conforms to the preset conditions as the task result to be adopted may comprise: calculating the corresponding historical data weight value of each public investigator who has accepted the auto insurance investigation task based on the historical investigation data of the public investigator; calculating a corresponding sum of weighted fractions of each set of investigation data obtained under the auto insurance investigation task based on the obtained historical data weight values according to a preset formula; and using the set of investigation data with the highest sum of weighted fractions as the task result to be adopted.

Those of ordinary skill in the art will appreciate that some or all steps of the foregoing embodiments can be implemented by hardware, or can also be implemented by instructing the relevant hardware using programs. Programs can be stored in a computer-readable storage medium, which can be a read-only memory, a magnetic disk, an optical disk, etc.

It should be noted that the above embodiments are merely illustrative of the technical aspects of the disclosure and are not restrictive. Although the disclosure has been described in detail with reference to some exemplary embodiments, it will be understood by those of ordinary skill in the art that various modifications or equivalent substitutions to the technical aspects of this disclosure can be contemplated without departing from the spirit and scope of the technical solutions of the disclosure.

**Claims**

1. A system for issuing an auto insurance investigation task, the system comprising:

a task issuance module configured to acquire associated crowdsoucing parameters of an auto insurance investigation task, determine one or more public investigators that match the auto insurance investigation task based on a preset first analysis rule and a preset model, and issue the auto insurance investigation task carrying the crowdsoucing parameters to mobile terminals of the determined one or more public investigators;
a data acquisition module configured to obtain corresponding investigation data of the auto insurance investigation task from a mobile terminal of at least one of the determined one or more public investigators who have accepted the issued auto insurance investigation task, after recognizing that the issued auto insurance investigation task has been accepted; and
a data analysis module configured to analyze the obtained investigation data based on a preset second analysis rule and find out the investigation data that conforms to preset conditions as task result to be adopted.

2. The system of claim 1, further comprising:

   a data test module configured to perform a significance test on the task result to be adopted based on a preset test rule; and
   a result feedback module configured to: take the task result to be adopted as the final result and return the final result to an issuer of the auto insurance task if the significance test is successful; otherwise send the task result to be adopted to a preset terminal for manual review if the significance test fails.

3. The system of claim 1, wherein the task issuance module is configured to:

   acquire the associated crowdsoucing parameters of the auto insurance investigation task by using Lagrange multiplier method and Karush-Kuhn-Tucker (KKT) conditions method; or
   acquire the associated crowdsoucing parameters of the auto insurance investigation task by using augmented Lagrangian method combined with method of moving asymptotes.

4. The system of claim 2, wherein the task issuance module is configured to:

   acquire the associated crowdsoucing parameters of the auto insurance investigation task by using the Lagrange multiplier method and Karush-Kuhn-Tucker (KKT) conditions method; or
   acquire the associated crowdsoucing parameters of the auto insurance investigation task by using augmented Lagrangian method combined with method of moving asymptotes.

5. The system of claim 1, wherein the task issuance module comprises:

   a model setting unit configured to set a corresponding preset model of each auto insurance investigation task as an i-dimensional space vector $Q_i$, and set a corresponding preset model of the personal information of each public investigator as a j-dimensional space vector $P_j$;
   a matrix operation unit configured to define an operation matrix $M_{i,\,j} = Q_i P_j$ for the vectors $Q_i$ and $P_j$, and calculating a corresponding personal weight value of each public investigator based on the defined operation matrix; and
   a personnel determination unit configured to select the public investigators whose personal weight values are greater than a preset threshold as the public investigators that match the auto insurance investigation task.

6. The system of claim 2, wherein the task issuance module comprises:

   a model setting unit configured to set a corresponding preset model of each auto insurance investigation task as an i-dimensional space vector $Q_i$, and set a corresponding preset model of the personal information of each public investigator as a j-dimensional space vector $P_j$;
   a matrix operation unit configured to define an operation matrix $M_{i,\,j} = Q_i P_j$ for the vectors $Q_i$ and $P_j$, and calculating a corresponding personal weight value of each public investigator based on the defined operation matrix; and
   a personnel determination unit configured to select the public investigators whose personal weight values are greater than a preset threshold as the public investigators that match the auto insurance investigation task.

7. The system of claim 1, wherein the data analysis module comprises:

   a historical weight calculation unit configured to calculate a corresponding historical data weight value of each public investigator who has accepted the auto insurance investigation task based on historical investigation data of the public investigator;
   a weighted sum calculation unit configured to calculate a corresponding sum of weighted fractions of each set of investigation data obtained under the auto insurance investigation task based on the obtained historical data weight values according to a preset formula; and

a task result determination unit configured to use the set of investigation data with the highest sum of weighted fractions as the task result to be adopted.

8. The system of claim 2, wherein the data analysis module comprises:

a historical weight calculation unit configured to calculate a corresponding historical data weight value of each public investigator who has accepted the auto insurance investigation task based on historical investigation data of the public investigator;

a weighted sum calculation unit configured to calculate a corresponding sum of weighted fractions of each set of investigation data obtained under the auto insurance investigation task based on the obtained historical data weight values according to a preset formula; and

a task result determination unit configured to use the set of investigation data with the highest sum of weighted fractions as the task result to be adopted.

9. A device for issuing an auto insurance investigation task, the device comprising a processing unit, as well as a system for issuing an auto insurance investigation task, an input/output unit, a communications unit, and a storage unit that are coupled to the processing unit, wherein the input/output unit is configured to input a user instruction and output response data of the device for issuing an auto insurance investigation task to the input user instruction, the communications unit is configured for communicative connection with a mobile terminal of a public investigator or a background server, the storage unit is configured to store the system for issuing an auto insurance investigation task as well as operation data of the system, and the processing unit is configured to call and execute the system for issuing an auto insurance investigation task to perform the following operations:

A: acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to the mobile terminals of the determined one or more public investigators;

B: obtaining corresponding investigation data of the auto insurance investigation task from a mobile terminal of at least one of the determined one or more public investigators who have accepted the issued auto insurance investigation task, after recognizing that the issued auto insurance investigation task has been accepted; and

C: analyzing the obtained investigation data based on a preset second analysis rule, and finding out the investigation data that conforms to the preset conditions as task result to be adopted.

10. The device of claim 9, wherein the bar code scanning device comprises an indicator light coupled to the processing unit and configured to emit an indicative light to indicate that there is currently a public investigator accepting the issued auto insurance investigation task.

11. The device of claim 9, wherein the processing unit is configured to call and execute the system for issuing an auto insurance investigation task to further perform the following operations:

performing a significance test on the task result to be adopted based on a preset test rule;

taking the task result to be adopted as the final result and return the final result to an issuer of the auto insurance task if the significance test is successful; and

otherwise sending the task result to be adopted to a preset terminal for manual review if the significance test fails.

12. The device of claim 9, wherein the processing unit is configured to call and execute the system for issuing an auto insurance investigation task to perform the following operations in performing operation A:

acquiring the associated crowdsoucing parameters of the auto insurance investigation task by using Lagrange multiplier method and Karush-Kuhn-Tucker (KKT) conditions method; or

acquiring the associated crowdsoucing parameters of the auto insurance investigation task by using augmented Lagrangian method combined with method of moving asymptotes.

13. The device of claim 11, wherein the processing unit is configured to call and execute the system for issuing an auto insurance investigation task to perform the following operations in performing operation A:

acquiring the associated crowdsoucing parameters of the auto insurance investigation task by using the Lagrange Multiplier Method and Karush-Kuhn-Tucker (KKT) Conditions method;

acquiring the associated crowdsoucing parameters of the auto insurance investigation task by using augmented Lagrangian method combined with method of moving asymptotes.

14. The device of claim 9, wherein the processing unit is configured to call and execute the system for issuing an auto insurance investigation task to perform the following operations in performing operation A:

setting a corresponding preset model of each auto insurance investigation task as an i-dimensional space vector $Q_i$, and setting a corresponding preset model of the personal information of each public investigator as a j-dimensional space vector $P_j$;

defining an operation matrix $M_{i,j} = Q_i P_j$ for the vectors Qi and Pj, and calculating a corresponding personal weight value of each public investigator based on the defined operation matrix; and

selecting the public investigators whose personal weight values are greater than a preset threshold as the public investigators that match the auto insurance investigation task.

15. The device of claim 11, wherein the processing unit is configured to call and execute the system for issuing an auto insurance investigation task to perform the following operations in performing operation A:

setting a corresponding preset model of each auto insurance investigation task as an i-dimensional space vector $Q_i$, and setting a corresponding preset model of the personal information of each public investigator as a j-dimensional space vector $P_j$;

defining an operation matrix $M_{i,j} = Q_i P_j$ for the vectors Qi and Pj, and calculating a corresponding personal weight value of each public investigator based on the defined operation matrix; and

selecting the public investigators whose personal weight values are greater than a preset threshold as the public investigators that match the auto insurance investigation task.

16. The device of claim 9, wherein the processing unit is configured to call and execute the system for issuing an auto insurance investigation task to perform the following operations in performing operation C:

calculating a corresponding historical data weight value of each public investigator who has accepted the auto insurance investigation task based on historical investigation data of the public investigator;

calculating a corresponding sum of weighted fractions of each set of investigation data obtained under the auto insurance investigation task based on the obtained historical data weight values according to a preset formula; and

using the set of investigation data with the highest sum of weighted fractions as the task result to be adopted.

17. The device of claim 11, wherein the processing unit is configured to call and execute the system for issuing an auto insurance investigation task to perform the following operations in performing operation C:

calculating a corresponding historical data weight value of each public investigator who has accepted the auto insurance investigation task based on historical investigation data of the public investigator;

calculating a corresponding sum of weighted fractions of each set of investigation data obtained under the auto insurance investigation task based on the obtained historical data weight values according to a preset formula; and

using the set of investigation data with the highest sum of weighted fractions as the task result to be adopted.

18. A method of issuing an auto insurance investigation task, the method comprising:

acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to mobile terminals of the determined one or more public investigators;

obtaining corresponding investigation data of the auto insurance investigation task from a mobile terminal of at least one of the determined one or more public investigators who have accepted the issued auto insurance investigation task, after recognizing that the issued auto insurance investigation task has been accepted; and

analyzing the obtained investigation data based on a preset second analysis rule and finding out the investigation data that conforms to the preset conditions as the task result to be adopted.

**19.** The method of claim 18, further comprising:

performing a significance test on the task result to be adopted based on a preset test rule;
taking the task result to be adopted as the final result and return the final result to an issuer of the auto insurance task if the significance test is successful; and
otherwise sending the task result to be adopted to a preset terminal for manual review if the significance test fails.

**20.** The method of claim 18, wherein analyzing the obtained investigation data based on the preset second analysis rule and finding out the investigation data that conforms to the preset conditions as the task result to be adopted comprises:

calculating a corresponding historical data weight value of each public investigator who has accepted the auto insurance investigation task based on historical investigation data of the public investigator;
calculating a corresponding sum of weighted fractions of each set of investigation data obtained under the auto insurance investigation task based on the obtained historical data weight values according to a preset formula; and
using the set of investigation data with the highest sum of weighted fractions as the task result to be adopted.

**21.** A computer-readable storage medium storing one or more programs, which, when executed by one or more processors, perform the following operations:

acquiring associated crowdsoucing parameters of an auto insurance investigation task, determining one or more public investigators that match the auto insurance investigation task based on a preset first analysis rule and a preset model, and sending the auto insurance investigation task carrying the crowdsoucing parameters to mobile terminals of the determined one or more public investigators;
acquiring investigation data of the auto insurance investigation task from a mobile terminal of at least one of the determined one or more public investigators who have accepted the issued auto insurance investigation task, after recognizing that the issued auto insurance investigation task has been accepted; and
analyzing the obtained investigation data based on a preset second analysis rule and finding out the investigation data that conforms to the preset conditions as task result to be adopted.

**22.** The computer-readable storage medium of claim 21, further comprising:

performing a significance test on the task result to be adopted based on a preset test rule;
taking the task result to be adopted as the final result and return the final result to an issuer of the auto insurance task if the significance test is successful; and
otherwise sending the task result to be adopted to a preset terminal for manual review if the significance test fails.

**23.** The computer-readable storage medium of claim 21, wherein analyzing the obtained investigation data based on the preset second analysis rule and finding out the investigation data that conforms to the preset conditions as the task result to be adopted comprises:

calculating a corresponding historical data weight value of each public investigator who has accepted the auto insurance investigation task based on historical investigation data of the public investigator;
calculating a corresponding sum of weighted fractions of each set of investigation data obtained under the auto insurance investigation task based on the obtained historical data weight values according to a preset formula; and
using the set of investigation data with the highest sum of weighted fractions as the task result to be adopted.

SYSTEM FOR ISSUING AUTO
INSURANCE INVESTIGATION
TASK

TASK ISSUANCE MODULE — 60

DATA ACQUISITION
MODULE — 70

DATA ANALYSIS MODULE — 80

FIG. 1

SYSTEM FOR ISSUING AUTO
INSURANCE INVESTIGATION
TASK

TASK ISSUANCE MODULE — 60

DATA ACQUISITION
MODULE — 70

DATA ANALYSIS MODULE — 80

DATA TEST MODULE — 90

RESULT FEEDBACK
MODULE — 100

FIG. 2

60

TASK ISSUANCE MODULE

MODEL SETTING UNIT — 601

MATRIX OPERATION UNIT — 602

PERSONNEL DETERMINATION UNIT — 603

FIG. 3

80

DATA ANALYSIS MODULE

HISTORICAL WEIGHT CALCULATION UNIT — 801

WEIGHTED SUM COMPUTATION UNIT — 802

TASK RESULT DETERMINATION UNIT — 803

FIG. 4

DEVICE FOR ISSUING AUTO
INSURANCE INVESTIGATION
TASK

11

SYSTEM FOR
ISSUING AUTO
INSURANCE
INVESTIGATION
TASK

12

INPUT UNIT

10

13

PROCESSING
UNIT

COMM. UNIT

14

STORAGE
UNIT

15

DISPLAY
UNIT

16

FIG. 5

DEVICE FOR ISSUING AUTO
INSURANCE INVESTIGATION
TASK

11

SYSTEM FOR
ISSUING AUTO
INSURANCE
INVESTIGATION
TASK

10

PROCESSING
UNIT

17

TOUCH INPUT/
DISPLAY UNIT

13

COMM. UNIT

14

STORAGE
UNIT

16

FIG. 6

ACQUIRING ASSOCIATED CROWDSOURCING PARAMETERS OF AN AUTO INSURANCE INVESTIGATION TASK, DETERMINING ONE OR MORE PUBLIC INVESTIGATORS THAT MATCH THE AUTO INSURANCE INVESTIGATION TASK BASED ON A PRESET FIRST ANALYSIS RULE AND A PRESET MODEL, AND ISSUING THE AUTO INSURANCE INVESTIGATION TASK CARRYING THE CROWDSOURCING PARAMETERS TO MOBILE TERMINALS OF THE DETERMINED ONE OR MORE PUBLIC INVESTIGATORS — S10

OBTAINING CORRESPONDING INVESTIGATION DATA OF THE AUTO INSURANCE INVESTIGATION TASK FROM A MOBILE TERMINAL OF AT LEAST ONE OF THE DETERMINED ONE OR MORE PUBLIC INVESTIGATORS WHO HAVE ACCEPTED THE ISSUED AUTO INSURANCE INVESTIGATION TASK AFTER RECOGNIZING THE ISSUED AUTO INSURANCE INVESTIGATION TASK HAS BEEN ACCEPTED — S20

ANALYZING THE OBTAINED INVESTIGATION DATA ACCORDING TO A PRESET SECOND ANALYSIS RULE AND FINDING OUT THE INVESTIGATION DATA THAT CONFORMS TO PRESET CONDITIONS AS THE TASK RESULT TO BE ADOPTED — S30

FIG. 7

# INTERNATIONAL SEARCH REPORT

| International application No. |
| --- |
| PCT/CN2017/070515 |

## A.  CLASSIFICATION OF SUBJECT MATTER

G06Q 10/06 (2012.01) i

According to International Patent Classification (IPC) or to both national classification and IPC

## B.   FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

WPI, EPODOC, CNKI, CNPAT,  IEEE, GOOGLE: loss assessment, crowdsourcing, release, account, terminal, accept, execution, result, vehicle insurance, survey, audience task, crowdsourcing, parameter, information, issu+, match+, user, terminal, perform +, result, check+, model, weight

## C.   DOCUMENTS CONSIDERED TO BE RELEVANT

| Category* | Citation of document, with indication, where appropriate, of the relevant passages | Relevant to claim No. |
| --- | --- | --- |
| PX | CN 105631600 A (PING AN TECHNOLOGY (SHENZHEN) CO., LTD.) 01 June 2016 (01.06.2016) claims 1-10, and description, paragraphs [0121]-[0158] | 1-23 |
| X | CN 104573995 A (CHONGQING RUANWEN TECHNOLOGY CO., LTD.) 29 April 2015 (29.04.2015) description, paragraphs [0075]-[0106] and [0112]-[0115] | 1-4, 7-13, 16-23 |
| Y | CN 104573995 A (CHONGQING RUANWEN TECHNOLOGY CO., LTD.) 29 April 2015 (29.04.2015) description, paragraphs [0075]-[0106] and [0112]-[0115] | 5, 6, 14, 15 |
| Y | CN 104599084 A (BEIHANG UNIVERSITY) 06 May 2015 (06.05.2015) description, paragraph [0063] | 5, 6, 14, 15 |

☒ Further documents are listed in the continuation of Box C. ☒ See patent family annex.

| | |
| --- | --- |
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"    document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
| --- | --- |
| 22 March 2017 | 11 April 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>MA, Chunli<br><br>Telephone No. (86-10) 62413712 |

Form PCT/ISA/210 (second sheet) (July 2009)

**EP 3 401 856 A1**

| | INTERNATIONAL SEARCH REPORT | International application No. |
|---|---|---|
| | | PCT/CN2017/070515 |

C (Continuation).      DOCUMENTS CONSIDERED TO BE RELEVANT

| Category* | Citation of document, with indication, where appropriate, of the relevant passages | Relevant to claim No. |
|---|---|---|
| A | US 2013197954 A1 (CROWD CONTROL SOFTWARE, INC.) 01 August 2013 (01.08.2013) the whole document | 1-23 |
| A | CN 104463424 A (SHANGHAI JIAO TONG UNIVERSITY) 25 March 2015 (25.03.2015) the whole document | 1-23 |

Form PCT/ISA /210 (continuation of second sheet) (July 2009)

**INTERNATIONAL SEARCH REPORT**
Information on patent family members

International application No.

PCT/CN2017/070515

| Patent Documents referred in the Report | Publication Date | Patent Family | Publication Date |
|---|---|---|---|
| CN 105631600 A | 01 June 2016 | None | |
| CN 104573995 A | 29 April 2015 | None | |
| CN 104599084 A | 06 May 2015 | None | |
| US 2013197954 A1 | 01 August 2013 | US 2015332188 A1 | 19 November 2015 |
| | | US 2015332187 A1 | 19 November 2015 |
| CN 104463424 A | 25 March 2015 | None | |

Form PCT/ISA /210 (patent family annex) (July 2009)